# EUROPEAN PATENT APPLICATION

(11) **EP 1 739 119 A1**
(43) Date of publication of application: **03.01.2007**
(21) Application number: 05013997.1
(22) Date of filing: 29.06.2005
(51) Int. Cl.: C08J 7/06, B29C 47/90

(54) **Process for the treatment of plastic profiles**

(71) Applicant: Bayer MaterialScience AG, 51368 Leverkusen (DE)
(72) Inventor: Piermatteo, Ciro, 51381 Leverkusen (DE); Kraner, Klaus, 42655 Solingen (DE)

(57) **Abstract**

A process for treatment of the plastic profiles which is characterized in that the plastic profile, after being extruded and calibrated, is passed through a bath containing at least one additive.

## Description

The invention relates to a process for the treatment, and in particular the additive treatment, of plastic profiles, in which the plastic profile, after being extruded and calibrated, is passed through a bath containing additives.

It is well-known to produce profiles, tubes and panels made of technical thermoplastics (such as for example PC, PC blends, PMMA and TPU) by extrusion. For the extrusion process, plastic granules are introduced into the extruder, melted and conveyed in the plasticizing system of the extruder consisting of a screw and a cylinder. The plastic melt issuing from the extruder is conveyed under pressure through a profiled die, during which it is preformed, and it is then brought into its final desired shape in a calibrator and cured by cooling at temperatures of usually - 10 to 165°C. Then, the profiles are withdrawn uniformly from the calibrator by a pull-off device and cut into lengths by cross-cutting. The plastics used for extrusion are usually processed at melting temperatures of 160 to 350°C, the cylinder temperatures of the plasticizing cylinder and the die temperatures being correspondingly adjusted for this purpose.

Thermoplastic granules such as polycarbonate, polymethyl methacrylate, polyamide, thermoplastic polyurethane granules and blends thereof with other thermoplastics, such as ABS graft polymers and polyesters, are today usually mechanically mixed with dye or additive masterbatch granules prior to the extrusion process in specific concentrations, using dry blend mixers, gravimetric proportioning weighers or similar mixing apparatuses and then introduced into the extruder and processed, or materials or thermoplastic granules which have already been dyed or treated with additives are processed to form profiled sections.

It is also known to carry out the dyeing or additive treatment of the profiles during the extrusion process.

The above processes have the disadvantage that the additive treatment, such as for example the dyeing or UV stabilization of plastic profiles during the extrusion or coextrusion process is very complicated and cost-intensive. In addition, these processes do not allow partial additive treatment or dyeing of the plastic profile. The entire profile is additive-treated or dyed.

Processes for dyeing shaped sections by immersion in a dye bath are already known (cf. WO 03/040461, WO 04/101881 and WO 03/083207). In these documents the finished shaped section, such as for example a lens, is dyed in a dyeing bath independently of the production process. None of the aforementioned documents does however describe a process in which plastic profiles are passed through a bath containing additives immediately after being extruded and calibrated.

The problem on which the present invention was based was therefore that of developing a process which avoids the abovementioned disadvantages and provides additional advantages. Thus, according to the invention coextruders or coextruder adapters or mixing apparatuses are not required for extruding coloured or additive-treated profiles. The quantity of the dyes and/or additives employed can be reduced and the production process is therefore less costly. According to the invention the additive treatment or dyeing can be applied merely to partial regions of the profile. The dyes penetrate the plastic as opposed to a more complicated surface coating.

In addition, due to the reduced finishing and rinsing times, a considerable reduction in time and a more rapid colour change is obtained. The versatility and flexibility of the dyeing process is considerably increased. Due, for example, to the lower temperatures, the process according to the invention also allows additive to be used which would not appear to be suitable for treatment in the extrusion process for reasons of thermal stability in the thermoplastics. The subsequent additive treatment according to the present process has no effect on the extrusion process. The conveying capacity and uniform conditions for processing the non treated plastic granules can be retained independently of the additive treatment process.

The present invention therefore relates to a process for the treatment, preferably additive treatment, and in particular the dyeing, of plastic profiles, which is characterized in that the plastic profile, after being extruded and calibrated, is passed through a bath containing additives. Plastic profiles in the context of the present invention are understood to be preferably panels of any shape, such as for example rib-reinforced sandwich panels, and (solid) profiled sections or hollow bodies, such as tubes.

The additives are preferably selected from at least one dyes, such as fluorescent and phosphorescent dyes and pigments, luminescent pigments or dyes, photochromatic and thermochromatic dyes/pigments, polymer dyes, UV stabilizers, antistatic agents, antidrop agents, IR absorbers, surfactants, optical brighteners and biocides. Dyes and UV stabilizers are particularly preferred additives. Very particularly preferred additives are dyes. According to the present invention dyes fall under the definition of additives, even if separate reference is made thereto.

Preferably the bath contains
i) at least one additive
ii) water
iii) at least one carrier represented by the following general formula (I)

   R-O-(CH₂)ₙ-OH (I)

   wherein R is a radical selected from linear or branched C₁-C₁₈ alkyl, benzyl, benzoyl and phenyl, and n is 2 or 3 and
iv) a diol selected from at least one of linear or branched C₂-C₂₀ aliphatic diols, poly(C₂-C₄ alkylene glycol), cycloaliphatic diols having from 5 to 8 carbon atoms in the cyclic ring, monocyclic aromatic diols, bisphenols and hydrogenated bisphenols;

Linear or branched alkyls from which R of formula (I) may be selected include, but are not limited to, methyl, ethyl, propyl, butyl, pentyl, hexyl,bathheptyl, octyl, nonyl, decyl, undecyl, dodecyl, tridecyl, tetradecyl, pentadecyl, hexadecyl, heptadecyl and octadecyl, and structural isomers thereof (e.g., iso-propyl, i-butyl, t-butyl, etc.).

With further reference to formula I, R may also be selected from benzyl, benzoyl and phenyl groups, each of which may independently and optionally be substituted with 1 to 5 groups selected from halo groups (e.g., chloro, bromo and fluoro), linear or branched C₁-C₉ alkyl groups (e.g., methyl, ethyl, propyl, butyl, pentyl, hexyl, heptyl, octyl and nonyl,), and aromatic groups (e.g., phenyl).

In an embodiment of the present invention, regarding formula I, n is 2 and R is selected from n-butyl, i-butyl and t-butyl. In a particularly preferred embodiment of the present invention, n is 2, and R is n-butyl.

The carrier is typically present in the bath in an amount of less than or equal to 30 parts by weight, preferably less than or equal to 25 parts by weight, and more preferably less than or equal to 20 partsparts by weight. The carrier is also typically present in the bath in an amount of at least 10 parts by weight, preferably at least 15 parts by weight, and more preferably at least 17 parts by weight. The carrier may be present in the bath in an amount ranging between any combination of these upper and lower values, inclusive of the values thereof. For example, the carrier may be present in the bath in an amount typically from 2 to 30 parts by weight, more typically from 5 to 25 parts by weight, and further typically in an amount of from 17 to 20 parts by weight. The parts weights being based on the total weight of the bath, in each case.

The bath also further includes a diol selected from at least one of linear or branched C₂-C₂₀ aliphatic diols, poly(C₂-C₄ alkylene glycol), cycloaliphatic diols having from 5 to 8 carbon atoms in the cyclic ring, monocyclic aromatic diols, bisphenols and hydrogenated bisphenols. Examples of linear or branched C₂-C₂₀ aliphatic diols include, but are not limited to, ethylene glycol, propylene glycol, 1,3-propane diol, 1,2- and 2,3-butane diol, pentane diols, hexane diols, heptane diols, octane diols, nonane diols, decane diols, undecane diols, dodecane diols, tridecane diols, tetradecane diols, pendadecane diols, hexadecane diols, hetadecane diols, octadecane diols, nonadecane diols and icosane diols.

Examples of poly(C₂ -C₄)alkylene glycols from which the diol (iv) may be selected include, but are not limited to, di-, tri-, tetra-, penta- and higher ethylene glycols, di-, tri-, tetra-, penta- and higher propylene glycols, and di-, tri-, tetra-, penta- and higher butylene glycols. Cycloaliphatic diols having from 5 to 8 carbon atoms that may be used as diol (iv) include, but are not limited to, cyclopentane diol, cyclohexane diol, cyclohexane dimethanol, cycloheptane diol and cyclooctane diol. Examples of monocyclic aromatic diols that may be used as diol (iv) include but are not limited to, benzene diol, e.g., 1,2-dihydroxy benzene and 1,3-dihydroxy benzene; C₁ -C₄ alkyl substituted benzene diol, e.g., 4-tert-butyl-benzene-1,2-diol, 4-methyl-benzene-1,2-diol, 3-tert-butyl-5-methyl-benzene-1,2-diol and 3,4,5,6-tetramethyl-benzene-1,2-diol; halo substituted benzene diol, e.g., 3,5-dichlorobenzene-1,2-diol, 3,4,5,6-tetrabromo-benzene-1,2-diol and 3,4,5-trichloro-benzene-1,2-diol; and C₁ -C₄ alkyl and halo substituted benzene diol, e.g., 3-bromo-5-tert-butyl-benzene-1,2-diol, 3,6-dichloro-4-methyl-benzene-1,2-diol, 3,-bromo-4,5-dimethyl-benzene-1,2-diol and 3-chloro-4,6-di-tert-butyl-benzene-1,2-diol.

Bisphenols and hydrogenated bisphenols that may be used as diol (iv) may be represented by the following general formula II,

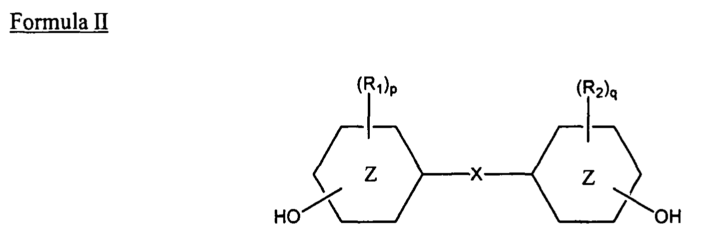

In formula II: R₁ and R₂ are each selected independently from each other and independently for each p and q from C₁ -C₄ alkyl (e.g., methyl, ethyl, n-propyl, iso-propyl, n-butyl, sec-butyl and tert-butyl), chlorine and bromine; p and q are each independently an integer from 0 to 4; and -X- is a divalent linking group selected from -O-, -S-, -S(O₂)-, -C(O)-, -CH₂-, -CH=CH-, -C(CH₃)₂-, and
-C(CH₃)(C₆H₅)-; and 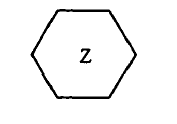 represents a benzene ring or a cyclohexane ring. An example of a bisphenol that may be used as diol (iv) is 4,4'-isopropylidenebisphenol (i.e., bisphenol A). An example of a hydrogenated bisphenol that may be used as diol (iv) is 4,4'-isopropylidenebiscyclohexanol.

In a preferred embodiment of the present invention, diol (iv) is a poly(C₂-C₄ alkylene glycol) selected from diethylene glycol, triethylene glycol, tetraethylene glycol, pentaethylene glycol and mixtures thereof. Particularly preferred diols are ethylene glycol and diethylene glycol.

The diol is typically present in the bath in an amount of less than or equal to 20 parts by weight, preferably less than or equal to 15 parts by weight, and more preferably less than or equal to 12 parts by weight. The diol is also typically present in the bath in an amount of at least 1 parts by weight, preferably at least 5 parts by weight, and more preferably at least 10 parts by weight. The diol may be present in the bath in an amount ranging between any combination of these upper and lower values, inclusive of the values thereof. For example, the diol may be present in the bath in an amount typically from 1 to 20 parts by weight, more typically from 5 to 15 parts by weight, and further typically in an amount of from 10 to 12 parts by weight. The parts weights being based on the total weight of the bath, in each case.

The dye that is present in the bath may be selected from static dyes, photochromic dyes and combinations thereof. As used herein and in the claims, the term "static dyes" means a dye that does not substantially change color upon exposure to (or being shielded from) ultraviolet (UV) light. The term "photochromic dyes" as used herein and the claims means dyes that reversibly change color upon exposure to UV light, as is known to the skilled artisan. Typically, upon exposure to a particular wavelength of UV light, a photochromic dye will be converted into an open or activated form which is colored (within a particular portion of the visible spectrum). Upon removal of the UV light source, the open / activated photochromic dye returns to a closed / inactivated from which is not colored, or which is at least less colored than the activated form.

Static dyes that may be included in the bath include, for example, fabric dyes, solvent and disperse dyes as well as dyes that are known in the art as being suitable for tinting plastic profiles, such as thermoplastic polycarbonate profiles. Examples of suitable disperse dyes include, but are not limited to, Disperse Blue #3, Disperse Blue #14, Disperse Yellow #3, Disperse Red #13 and Disperse Red #17. The classification and designation of the static dyes are recited herein in accordance with "The Colour Index", 3rd edition published jointly by the Society of Dyes and Colors and the American Association of Textile Chemists and Colorists (1971), which is incorporated herein by reference. Dyestuffs can generally be used either as a sole dye constituent or as a component of a dye mixture depending upon the color desired. Thus, the term static dye as used herein includes mixtures of static dyes.

Other dyes used are Solvent Dye like : Solvent Blue 35, Solvent Green 3 and Acridine Orange Base.

The dye class known as "Solvent Dyes" is useful in the practice of the present invention. This dye class includes the preferred dyes Solvent Blue 35, Solvent Green 3 and Acridine Orange Base. However, Solvent Dyes, in general, do not color as intensely as do Disperse Dyes.

Further suitable static dyes include, for example, water-insoluble azo, diphenylamine and anthraxquinone compounds. Especially suitable examples include acetate dyes, dispersed acetate dyes, dispersion dyes and dispersol dyes, such as are disclosed in Colour Index, 3rd edition, vol. 2, The Society of Dyers and Colourists, 1971, pp. 2479 and pp. 2187-2743, respectively all incorporated herein by reference. Preferred dispersed dyes include Dystar's DIANIX Blue E-R150 (anthraquinone/Disperse Blue) and DIANIX Orange E-3RN (azo dye/ CI Disperse Orange 25). It has been observed that phenol red and 4-phenylazophenol do not provide a desirable level of dying when the plastic profile is thermoplastic polycarbonate, in the present process.

Static dyes known as direct dyes and those referred to as acid dyes have been observed to provide a less than desirable level of tinting when the plastic profile is thermoplastic polycarbonate, in the practice of the present invention. However, acid dyes have been observed to be effective with nylon.

Another class of suitable static dyes that may be used in the method of the present invention include non-migratory static dyes (i.e., static dyes that have been chemically modified to minimize or eliminate their migration out of plastic profiles into which they have been incorporated). A particular class of non-migratory static dyes may be represented by the following formula III,

R₅-(polymeric constituent-Y)ₜ III

In formula III: R₅ represents an organic dyestuff radical (or chromophore radical); the polymeric constituent is selected independently for each (t) from homopolymers, copolymers and blockcopolymers of poly(C₂-C₄ alkylene oxides), e.g., homopolymers of polyethylene oxide and polypropylene oxide, poly(ethylene oxide - propylene oxide) copolymers, and di- or higher block copolymers of ethylene oxide and propylene oxide; (t) may be an integer from 1 to 6; and (Y) is selected independently for each (t) from hydroxyl, primary amine, secondary amine and thiol groups. The polymeric constituent may have a molecular weight of from, for example, 44 to 1500.

Dyestuff radicals from which (Y) may be selected include, but are not limited to, nitroso, nitro, azo (e.g., monoazo, diazo and triazo), diarylmethane, triarylmethane, xanthene, acridene, methine, thiazole, indamine, azine, oxazine and anthraquinone dyestuff radicals. Non-migratory static dyes represented by formula III are described in further detail in United States Patent No.'s: 4,284,729; 4,640,690; and 4,812,141.

Non-migratory static dyes have been found to be useful when dyeing plastic profiles by means of imbibition or diffusion in accordance with the method of the present invention (e.g., by dipping). When incorporated into the plastic profile by means of imbibition, excess non-migratory static dye can be washed off of the plastic profile, with a minimum of imbibed non-migratory static dye being leached from the plastic profile. Non-migratory static dyes (e.g., as represented by formula III) have been found to be particularly useful in the method of the present invention when dyeing (e.g., by dipping) plastic profiles fabricated from thermoplastic polyurethane.

Photochromic dyes that may be used in the present method include those known to the skilled artisan. Classes of suitable photochromic dyes include, but are not limited to: spiro(indoline)naphthoxazines and spiro(indoline)benoxazines (e.g., as described in United States Patent No. 4,818,096); and chromenes, such as benzopyrans and naphthopyrans (e.g., as described in United States Patent No. 5,274,132), and benzopyrans having substituents at the 2-position of the pyran ring and an optionally substituted heterocyclic ring, such as a benzothieno or benzofurano ring fused to the benzene portion of the benzopyran (e.g., as described in United States Patent No. 5,429,774). Further classes of photochromic dyes include, for example, fulgides and fulgimides, such as 3-furyl and 3-thienyl fulgies and fulgimides (e.g., as described in United States Patent No. 4,931,220). The pertinent disclosures of the cited patents with regard to photochromic dyes is incorporated herein by reference.

Photochromic dyes or mixtures thereof may be used alone or in combination with one or more static dyes in the method of the present invention. Typically, the imbibition of photochromic dyes into thermoplastic profiles, such as thermoplastic polycarbonate profiles, results in a dyed plastic profile that does not readily change color upon exposure to or shielding from UV light. While not intending to be bound by any theory, it is believed based on the information at hand, that the photochromic dyes become trapped in either an open or closed form within the thermoplastic polymer matrix. The imbibition of photochromic dyes into plastic profiles fabricated from thermoset polymers, such as thermoset polycarbonates or thermoset polyurethanes, typically results in the formation of a dyed plastic profile having photochromic properties.

The amount of additive, preferably the dye, present in the bath may vary widely. Typically the dye is present in the bath in an amount sufficient to result in the formation of a dyed plastic profile having a colored effect and/or a photochromic effect that is discernible to the naked eye, e.g., upon exposure to UV light in the case of photochromic dyes.

The amount of dye that is actually present in the bath will depend on the solubility of the dye within the mixture of water, carrier and diol. The solubility of the dye within the bath will also be affected by the temperature of the bath. In those instances where the dye is not fully soluble in the bath, the bath is deemed to contain a saturated level of dye. By adding an amount of dye that is in excess of the saturation level of dye in the bath (e.g., to a bag filter through which the bath is continually passed) the level of dye in the bath can be maintained at the saturation level during dyeing operations. The level (e.g., the saturation level) of dye in the bath can be determined periodically or continuously by, for example, thermogravimetric analysis or spectrophotometric analysis.

Typically the additive, preferably the dye is present in the bath in an amount of less than or equal to 15 parts by weight, more typically less than or equal to 5 parts by weight, further typically less than equal to 1 parts by weight, and still further typically less than 0.5 parts by weight. The additive/dye is also typically present in the bath in an amount of at least 0.001 parts by weight, preferably at least 0.005 parts by weight, and more preferably at least 0.01 parts by weight. The additive/dye may be present in the bath in an amount ranging between any combination of these upper and lower values, inclusive of the values thereof. For example, the additive/dye may be present in the bath in an amount typically from 0.001 to 15 parts by weight, more typically from 0.005 to 5 parts by weight, further typically in an amount of from 0.01 to 1 parts by weight, and still further typically in an amount of from 0.01 to 0.5 parts by weight. In an embodiment, the dye is present in the bath in an amount of 0.03 parts by weight. The parts weights being based on the total weight of the bath, in each case. The sum of all the parts by weight of the bath are standardized to 100.

In a preferred embodiment of the present invention, the bath contains: 0.001 to 0.5 parts by weight of said additive/dye; 65 to 75 parts by weight of water; 1,0 to 25 parts by weight of said carrier; and 0,5 to 15 parts by weight of said diol. The parts weights being based, in each case, on the total weight of the bath Including other components such as static dyes and other components (such as UV Absorbers, Photometric dyes, polymeric dyes, surfactant, optical brightness agents, antimicrobical agents)

Water is typically present in the bath in an amount of less than or equal to 99 parts by weight, preferably less than or equal to 80 parts by weight, and more preferably less than or equal to 75 parts by weight. Water is also typically present in the bath in an amount of at least 50 or 51 parts by weight, preferably at least 60 parts by weight, and more preferably at least 65 parts by weight. Water may be present in the bath in an amount ranging between any combination of these upper and lower values, inclusive of the values thereof. For example, water may be present in the bath in an amount typically from 50 (or 51) to 85 parts by weight, more typically from 60 to 87 parts by weight, and further typically in an amount of from 65 to 75 parts by weight. The parts weights being based on the total weight of the bath, in each case. The water used is preferably deionized water or distilled water.

In an embodiment of the present invention, the bath further includes a surfactant (or emulsifier), which is different from each of the carrier and the diol. Suitable surfactants in the present invention are readily dispersible upon being poured into water, and then form a milky emulsion upon agitation thereof. The surfactant may be selected from at least one of: anionic surfactants; amphoteric surfactants; and a non-ionic surfactant selected from at least one of poly(C₂-C₄ alkoxylated) C₁₄-C₁₈ unsaturated fatty acids, poly(C₂-C₄ alkoxylated) phenol and poly(C₂-C₄ alkoxylated) C₁-C₉ alkyl substituted phenol.

Examples of anionic surfactants that may be used in the present invention include, for example, amine salts or alkali salts of carboxylic, sulfamic or phosphoric acids, for example sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2-ethanediyl),alpha.-sulfo-omega-hydroxy ether with phenol 1-(methylphenyl)ethyl derivative ammonium salts

Amphoteric surfactants that may be present in the bath include, for example: lauryl sulfobetaine; dihydroxy ethylalkyl betaine; amido betaine based on coconut acids; disodium N-lauryl amino propionate; or the sodium salts of dicarboxylic acid coconut derivatives.

Examples of poly(C₂-C₄ alkoxylated) C₁₄-C₁₈ unsaturated fatty acids include, ethoxylated, propoxylated and/or butoxylated tetradecenyl carboxylic acid. Examples of poly(C₂-C₄ alkoxylated) phenols include ethoxylated, propoxylated and/or butoxylated phenol. Examples of poly(C₂-C₄ alkoxylated) C₁-C₉ alkyl substituted phenols, include, octylphenoxypolyethylene-oxyethanol and poly(oxy-1,2-ethanediyl), alpha-phenyl-omega-hydroxy, styrenated.

The optional surfactant (emulsifier) may be used in an amount less than or equal to 5 parts by weight. Preferably the optional surfactant is present in the bath in an amount of 0.5 to 5 parts by weight, and more preferably in an amount of 1 to 4 parts by weight. The parts weights, in each case, being based on the weight of the bath.

The bath may further optionally include a performance enhancing additive selected from at least one of UV stabilizers, optical brighteners, mold release agents, antistatic agents, thermal stabilizers, IR absorbers and antimicrobial agents (substances or compounds). Inclusion of one or more of these optional performance enhancing additives in the bath serves to improve the physical performance / properties of the dyed plastic profile. In addition to the dye, the optional additives also diffuse, impregnate or otherwise are imbibed into the bulk of the plastic profile while it is immersed in the bath. For example, including UV stabilizers in the bath results in a dyed plastic profile having improved UV resistance. Mold release agents would be more advantageously included in the bath when the plastic profile is selected from thermoplastic pellets and/or thermoplastic strands, from which a molded profile would later be prepared, as will be discussed further herein. The optional performance enhancing additives may be selected from those that are known for use in preparing thermoplastic and thermoset molded plastic profiles.

Classes of UV (ultraviolet) stabilizers (or absorbers) that may be used in the bath of the present invention include, but are not limited to salicylic acid UV absorbers, benzophenone UV absorbers, benzotriazole UV absorbers, cyanoacrylate UV absorbers, and mixtures thereof. More specific examples of benzotriazole UV absorbers include but are not limited to: 2-(2'-hydroxy-5'methylphenyl)-benzotriazole (commercially available as Tinuvin^{®} P from Ciba, Tarrytown, N.Y.); 2-(3'-5'-di-tert-butyl-2'-hydroxyphenyl)-5-chlorobenzotriazole (commercially available as Tinuvin^{®} 327 from Ciba); 2(2'-hydroxy-3'-5'-di-tert-amylphenyl)benzotriazole (commercially available as Tinuvin^{®} 328 from Ciba); benzenepropanoic acid, 3-(2H-benzotriazol-2-yl)-5-(1,1-dimethyl ethyl)-4-hydroxy-, C₇₋₉ branched alkyl esters (commercially available as Tinuvin^{®} 384 from Ciba); 2-(3',5'-bis(1-methyl-1-phenylethyl)-2'-hydroxyphenyl)benzotriazole (commercially available as Tinuvin^{®} 900 from Ciba); 2-[2-hydroxy-3-dimethylbenzylphenyl-5-(1,1,3,3-tetramethylbutyl)]-2H-benzo triazole (commercially available as Tinuvin^{®} 928); a mixture of poly (oxy-1,2-ethanediyl), α-[3-[3-(2H-benzotriazol-2-yl)-5-(1,1-dimethylethyl)-4-hydroxyphenyl]-1-oxopropyl]-omega-hydroxy and poly(oxy-1,2-ethanediyl), α-[3-[3-(2H-benzotriazol-2-yl)-5-(1,1-dimethylethyl)-4-hydroxyphenyl]-1-oxopropyl]-omega-[3-[3-(2H-benzotriazol-2-yl)-5-(1,1-dimethylethyl)-4 -hydroxyphenyl]-1-oxopropyl]-(commercially available as Tinuvin^{®} 1130 from Ciba); and 2-[4-[2-hydroxy-3-tridecyl oxypropyl]oxy]-2-hydroxyphenyl]-4,6-bis(2,4-dimethylphenyl)-1,3,5-triazine and 2-[4-[2-hydroxy-3-dodecyl oxypropyl]oxy]-2-hydroxyphenyl]-4,6-bis(2,4-dimethylphenyl)-1,3,5-triazine (commercially available as Tinuvin^{®} 400 from Ciba). An example of a commercially available benzophenone UV stabilizer is 2-hydroxy-4-(N-octoxy) benzophenone (commercially available as Lowilite^{®} 22 from Great Lakes Chemical Corp. of West Lafayette, Ind.).

Further examples of commercially available UV stabilizers that may be use in the present invention include, but are not limited to: p-methoxycinnamic acid 2-ethylhexyl ester stabilized with butylated hydroxy toluene (hereinafter "BHT") (commercially available as Uvinul MC 80 from BASF of Mount Olive, N.J.); p-methoxycinnamic acid 2-ethylhexyl ester unstabilized (commercially available as Uvinul MC 80 N from BASF); 2-cyano-3,3-diphenylacrylic acid 2'-ethylhexyl ester (commercially available as Uvinul 539 T from BASF); 2-hydroxy-4-(N-octoxy) benzophenone (commercially available as Cyasorb UV-501 from Cytec of West Paterson, N.J.); 2-(2'-hydroxy-3'-5'-di-t-amylphenyl) benzotriazole (commercially available as Cyasorb UV-2337 from Cytec); and 2-(2-hydroxy-5-t-octylphenyl) benzotriazole (commercially available as Cyasorb UV-5411 PA from Cytec).

A further class of UV stabilizers that may be used in the method of the present invention include those modified with at least one poly(oxyalkylene) chain. Such poly(oxyalkylene) chain modified UV stabilizers are characterized in having low migratory properties once imbibed (or diffused) into the plastic profile (e.g., they are not easily leached out of the plastic profile into which they have been imbibed). The poly(oxyalkylene) chain may be a homopolymer, copolymer or block-copolymer formed from the reaction of C₂-C₂₀ alkyelene oxides (e.g., ethylene oxide, propylene oxide and butylene oxide). The poly(oxyalkylene) group may be terminated with a hydroxyl group, a C₁-C₂₀ alkyl ether group, or a C₁-C₂₀ ester group. Poly(oxyalkylene) chain modified UV stabilizers are described, for example, in further detail in United States Patent No. 6,602,447 B2.

Optical brighteners that may be included in the bath in the method of the present invention typically absorb a light wavelength of 450 nm or less and emit the light at a higher wavelength, such as a wavelength of 550 nm or less, preferably 525 nm or less. It is preferred that the emitted light be in the blue region of the visible spectrum (e.g., emitted light having a wavelength of at least about 400 nm and up to about 525 nm. Most preferably, the light emitted is no more than about 500 nm.

Classes of optical brighteners that may be used in the present invention include, but are not limited to benzoxazole derivatives and stilbene derivatives. Examples of commercially available benzoxazole derivatives that may be used in the present invention include, but are not limited to:

2,2'-(2,5-thiophenediyl) bis [5-tert-butylbenzoxazole] (commercially available as Uvitex^{®} OB from Ciba); benzoxazole derivatives such as Blankophor^{®} KLA (from Bayer of Pittsburgh, Pa.); Hostalux^{®} KCB (from Clariant of Muttenz, Switzerland); and Hostalux^{®} KCU (from Clariant). An example of a commercially available stilbene derivative is 4,4'-bis(2-benzoxazolyl) stilbene (commercially available as Eastobrite^{®} OB-1 from Eastman of Kingsport, Tenn.). Further classes of optical brighteners that may be used in the present invention include, but are not limited to: derivatives of 4,4'-diminostilbene-2-2'-disulfonic acid; coumarin derivatives (e.g., 4-methyl-7-diethylaminocoumarin); and bis-(styryl) biphenyls.

Classes of mold release agents that may be included in the bath include, but are not limited to hydrocarbon-based mold release agents, fatty acid-based release agents, fatty acid amide-based mold release agents, alcohol-based mold release agents, fatty acid ester-based mold release agents, silicone-based mold release agents, and mixtures or combinations thereof. Examples of hydrocarbon-based mold release agents include, synthetic paraffins, polyethylene waxes and fluorocarbons. Fatty acid-based release agents that may be used include, for example, stearic acid and hydroxystearic acid. Fatty acid amide-based mold release agents that may be used include, for example, stearic acid amide, ethylenebisstearoamide and alkylenebisfatty acid amides. Examples of alcohol-based mold release agents include, stearyl alcohol, cetyl alcohol, and polyhydric alcohols such as polyglycols and polyglycerols. An example of a fatty acid ester-based mold release agent that may be included in the dye is butyl stearate.

Antistatic agents that may be included in the bath in the method of the present invention include, but are not limited to non-ionic antistatic agents, such as those containing fluorocarbon groups, and silicone oils, such as BAYSILONE O1 A (commercially available from Bayer AG, Germany). Further examples of antistatic agents that may be used in the present invention include, distearylhydroxylamine, triphenyl amine, tri-n-octylphosphine oxide, triphenyl phosphine oxide, pyridine N-oxide and ethoxylated sorbitan monolaurate.

Classes of thermal (or heat-resistant) stabilizers that may be included in the bath of the method of the present invention include, but are not limited to, phenol stabilizers, organic thioether stabilizers, organic phosphide stabilizers, hindered amine stabilizers, epoxy stabilizers and mixtures thereof. Specific examples of thermal stabilizers include, but are not limited to, 2,6-di-t-butyl-p-cresol, o-t-butyl-p-cresol, tetrakis-(methylene-3-(3,5-di-t-butyl-4-hydroxyphenyl)propionate)methane, β-naphtylamine, p-phenylenediamine, and thiodiethylene bis(3,5-di-tert-butyl)-4-hydroxyhydrocinnamate, which is commercially available from Ciba Specialty Chemical under the tradename IRGANOX 1035 thermal stabilizer.

Infra red (IR) absorbers that may be used in the method of the invention include dyes that absorb in the IR region of the spectrum. Examples of commercially available IR absorbers include, CYASORB IR-99, IR-126 and IR-165, which are available from Glendale Protective Technologies, Inc., Lakeland, Fla.

Antimicrobial agents that may be included in the bath in method of the present invention include, for example, substances having antimicrobial activity towards microorganisms, such as pathogenic microorganisms. The term "antimicrobial agents" as used herein and in the claims is also inclusive of antiseptic, disinfectant and antifungal substances. In addition, the antimicrobial agents may also be used in a pre-activated form, e.g., in a form that does not become antimicrobially active until the occurrence of a triggering event, such as action of a microbe on the pre-activated substance.

Examples of antimicrobial agents that may be included in the bath include, but are not limited to: quinolones, such as nalidixic acid, pipemidic acid, cinoxacin, ciprofloxacin, norfloxacin, ofloxacin, pefloxacin and enoxacin; aminoglycosides, such as gentamycin, kanamycin, amikacin, sisomycin, tobramycin and netilmicin; macrolides, such as erythromycin, clarithromycin and azithromycin; polypeptides, such as bacitracin, mupirocin, thyrothricin, gramicidin and tyrocidin; lincomycins, such as lincomycin and clindamycin; and antimycobacterial agents, such as rifampicin and fusidic acid. Further examples of antimicrobial agents that may be used in the bath include: 10,10'-oxybisphenoxy arsine; 2-n-octyl-4-isothiazolin-3-one; 2,4,4'-trichloro-2'-hydroxy diphenyl ether (also named 5-chloro-2-(2,4-dichlorophenoxy)phenol, and commonly referred to as Triclosan); N-butyl-1,2-benzisothiazolin-3-one; and N-(trichloromethylthio)phthalamide.

The performance enhancing additives if used are typically present in the bath in a positive amount totaling less than or equal to 15 parts by weight, preferably less than or equal to 5 parts by weight, and more preferably less than or equal to 1 parts by weight. The performance enhancing additives are also typically present in the bath in an amount totaling at least 0.001 parts by weight, preferably at least 0.005 parts by weight, and more preferably at least 0.01 parts by weight. The performance enhancing additives may be present in the bath in a total amount ranging between any combination of these upper and lower values, inclusive of the recited values thereof. For example, the performance enhancing additives may be present in the bath in an amount typically totaling from 0.001 to 15 parts by weight, more typically from 0.005 to 5 parts by weight, and further typically in an amount of from 0.01 to 1 parts by weight. The parts weights being based on the total weight of the bath, in each case.

The plastic profile may comprise at least one polymer selected from thermoplastic and/or thermoset polymers. In an embodiment of the present invention, the plastic profile comprises a polymer selected from at least one of (co)polyesters, (co)polycarbonates, polyesterpolycarbonate copolymers, acrylonitrile-butadiene-styrene (ABS) copolymers, polyamides, polyurethanes, polyalkyl(meth)acrylate (e.g., polymethylmethacrylate) and styrene copolymers (e.g., styrene acrylonitrile copolymers). The (co)polyesters, (co)polycarbonates, polyesterpolycarbonate copolymers may be aliphatic or aromatic polymers (e.g., containing residues of bisphenol A). These recited polymers may be thermoplastic polymers, thermoset polymers or a combination thereof, as the case may be.

As used herein and in the claims, the term "thermoplastic polymer" and similar terms means a polymer that has a softening or melting point, and is substantially free of a three dimensional crosslinked network resulting from the formation of covalent bonds between chemically reactive groups, e.g., active hydrogen groups and free isocyanate groups. Thermoplastic polymers that may be used in the present invention include those known to the skilled artisan, such as thermoplastic (co)polyesters, thermoplastic (co)polycarbonates, thermoplastic polyesterpolycarbonate copolymers, thermoplastic acrylonitrile-butadiene-styrene (ABS) copolymers, thermoplastic polyamides, thermoplastic polyurethanes, thermoplastic polyalkyl(meth)acrylate and thermoplastic styrene copolymers.

As used herein and in the claims the term "thermoset polymer" and similar terms means polymers having a three dimensional crosslinked network resulting from the formation of covalent bonds between chemically reactive groups (e.g., active hydrogen groups and free isocyanate groups or oxirane groups; or between unsaturated groups, such as allyl groups). Thermoset polymers typically do not have a melting point. Thermoset polymers that may be used in the present invention include those known to the skilled artisan, such as thermoset (co)polyesters, thermoset (co)polycarbonates, thermoset polyesterpolycarbonate copolymers, thermoset polyamides, thermoset polyurethanes, and thermoset polyalkyl(meth)acrylate.

Preferred thermoset polymers include thermoset polycarbonates. A preferred thermoset polycarbonate is a polymerizate of a polymerizable composition comprising polyol(allyl carbonate) monomers, e.g., CR-39 diethyleneglycol bis(allyl carbonate) monomer available commercially from PPG Industries, Inc.

The plastic profile may contain additives that are known to the skilled artisan. Such additives include, but are not limited to: mold release agents; fillers; reinforcing agents in the form of fibers or flakes (e.g., metal flakes such as aluminum flakes); flame retardant agents; pigments; and opacifying agents, such as titanium dioxide; light-diffusing agents, such as polytetrafluoroethylene, zinc oxide, Paraloid EXL-5136 available from Rohm and Haas and crosslinked polymethylmethacrylate microspheres (such as n-licrospheres from Nagase America); UV-stabilizers; hydrolytic stabilizers; thermal stabilizers; and antimicrobial agents. In an embodiment, the plastic profile contains at least one of pigments, crosslinked polymethylmethacrylate microspheres, glass microspheres and metal flakes.

The molded plastic profile may be selected from shaped profiles, films (e.g., having a thickness of less than 30 mils (762 µm)), and sheets (e.g., having a thickness of greater than or equal to 30 mils (762 µm)).

Profile is immersed at least partially in the bath for a period of time and at temperature at least sufficient to facilitate at least some impregnation (diffusion or imbibition), of the additive/dye into the bulk of the plastic profile thus effecting dyeing (or tinting) or adding an additive thereof. The time and temperature employed typically depends on the composition of the plastic profile. Thermoset plastic profiles are typically more resistant to heat (e.g., having a higher heat distortion temperature) than thermoplastic profiles. As such, thermoset plastic profile can typically withstand immersion in baths at higher temperatures than thermoplastic profiles.

Immersion times may be up to an hour , preferably 15 minutes depending on the velocity of the extruder and the length of the bath. Typically the length of the bath is up to 10 meters, preferable up to 3, particularly up to 1 meter. Immersion times are also typically at least 5 seconds, more typically at least 30 seconds, and even more typically at least 1 minute. The immersion time may range between any of these upper and lower values, inclusive of the recited values. The temperature of the bath during immersion of the plastic profile is typically at least room temperature (e.g., 25°C) and less than 140 °C or decomposition temperature of the bath. Typically the bath is maintained at a temperature of 25°C to 99°C, for example from 60°C to 97°C or from 70°C to 95°C. As described previously herein, the time and temperature of immersion will depend at least in part on the type of plastic profile that is to be dyed or to be blended with an additive. For example, with plastic profiles of thermoplastic aromatic polycarbonate, dyeing/blending an additive may be efficiently carried out at a temperature of 90 to 99°C, with an immersion time of typically less than 1 hour, and more typically in the range of 1 to 15 minutes. With temperature higher then the boiled point, and under pressure higher the 0,1 Bar the dyeing/blending time will be reduced to less the 5 minutes,

In some instances the addtitive/dye may be more quickly and efficiently imbibed into a softer plastic profile, such as a softer thermoplastic profile, in which case a lower bath temperature will typically suffice. For example, plastic profiles fabricated from thermoplastic polyurethanes, or thermoplastic styrene-acrylonitrile copolymers (SAN's), may be readily dyed using the same bath composition used for tinting/blending an additive thermoplastic aromatic polycarbonate, but at temperatures of 60°C and 80°C respectively.

The so treated plastic profile is then withdrawn from the bath. Withdrawal of the treated plastic profile from the bath may be performed quickly or at a slower rate (e.g., at a rate sufficient to effect a tinting gradient). When forming a dyed plastic profile having a tinting gradient, the portion of the profile that remains in the bath for a longer period of time is impregnated with more dye, and thus exhibits a greater degree of tinting (relative to those portions which were removed from the bath at an earlier time).

The bath may be prepared by mixing the additive/dye, water, carrier, diol, optional surfactants and optional performance enhancing additives together in any order. For example the carrier and diol may be mixed together with the additive/dye, and then this mixture is either added to water or water is added to it. In an embodiment, the bath is formed by: (i) preparing a mixture of water, carrier and diol; (ii) introducing the addtitive/dye into a filter; and (iii) passing the mixture over the additive/dye and through the filter, thereby forming the bath. The bath, or at least a portion thereof, is then typically passed continuously through the filter. Optionally, the mixture of water, carrier and diol may be heated, e.g., heated to a temperature of 25°C to 99°C, or 60°C to 97°C, or 70°C to 95°C, and then the heated mixture is contacted with the additive/dye in the filter.

The filter into which the additive/dye is added, may be any suitable filter known to the skilled artisan. A preferred type of filter is a bag filter, typical for this application are filter in the range from 5 to 500 µm, more typical are between 20 and 200 µm. Preparing and maintaining the bath in this manner, ensures that the level of dye in the bath is maintained substantially at a saturation level (as discussed previously herein). In addition, passing the bath continuously through the bag filter serves to remove particulate contaminants therefrom (e.g., unsolubilized dye pprofiles), which could foul the dyed or treated plastic profiles prepared by immersion in the bath.

In a further embodiment, the bath is continuously introduced into and withdrawn from an immersion tank (or vessel). Typically, the immersion tank is part of a circuit which includes an inlet that is in fluid communication (via an inlet conduit) with a pump, which is in fluid communication with an outlet from the tank via an outlet conduit. The circuit may optionally include at least one filter, e.g., a bag filter as described previously herein, located inline with the inlet and/or outlet conduits. Preferably, the inlet and outlet of the immersion tank are positioned below the liquid level of the bath within the tank.

In addition to this process filter, will be used a very fine filter which allow to filter profile less then 100 µm, typical are less then 25 µm.

The immersion tank inlet may include a plate having a plurality of perforations (e.g., a diffuser or diffuser plate). Continuously introducing the bath into the immersion tank by passage through a plate having a plurality of perforations increases the level of turbulent mixing within the immersion tank, and improves the efficiency and uniformity of dyeing of plastic profiles immersed therein. The perforations in the diffuser plate may have any suitable shape, e.g., circular, ellipsoid, polygonal or combinations thereof. The perforations of the diffuser plate typically have diameters of from 0.79 mm to 12.70 mm, e.g., from 3.17 mm to 6.35 mm. The diffuser plate may have any suitable configuration, e.g., it may be flat, concave or convex.

The scope of the method of the present invention is inclusive of additional steps whereby the composition of the bath is modified, e.g., such that an initial addtive/dye or additives/dyes may be substituted with a subsequent additive/dye or additives/dyes. In an embodiment of the present invention, the addtitive/dye are separated from the other components of the bath (e.g., the water, carrier, diol and optional surfactants). Such a separation, is environmentally favorable in that it allows for re-use of the non-additive/non-dye components of the bath, for example with another additive(s)/dye(s), or with a fresh additive(s)/dye(s), or as a rinse composition for rinsing treated plastic profiles removed from the bath. In addition, the additive/dye separation method may be performed if the additive/dye of the bath has been damaged, such as oxidized or otherwise denatured (e.g., due to over heating due to a temperature spike).

The dye separation process may be performed by contacting the bath with particulate activated carbon, and then isolating a substantially dye-free liquid therefrom containing water, carrier, diol and optional surfactants in substantially the same relative proportions as prior to the separation step. The dye-free liquid may then be mixed with another dye(s) to form a different bath. The bath may be contacted with the activated carbon by passing the bath continuously through a bed or column containing activated carbon.

The activated carbon typically retains substantially all of the dye of the bath, and preferably less than a minimal amount of the organic liquid components of the bath (e.g., carrier, diol and optional surfactants). However, there may be some evaporation of the organic liquid components, requiring adjustment of the dye-free liquid by means of subsequent additions of the evaporated components. It has been found that when the dye separation step is performed with a bath that contains dye, water, carrier and diol (in the absence of optional surfactants and optional performance enhancing additives), substantially none of the organic liquid components are retained on the activated carbon. This result is particularly surprising in that the use of activated carbon for the separation of organic compounds from aqueous compositions is known. As such, retention of both the dye and substantial amounts of the organic liquid components of the bath would be expected, but surprisingly is not observed in the present case.

In an embodiment of the present invention, the method further involves a dye separation process that includes:
(i) contacting the bath with particulate activated carbon to form a mixture of the bath and particulate activated carbon;
(ii) isolating, from the mixture, a dye-free liquid comprising water, carrier and diol; and
(iii) optionally adding at least one dye to the dye-free liquid, thereby forming a further bath.

As discussed previously herein, the bath may be contacted with the particulate activated carbon by passing the bath through a bed or a column containing the particulate activated carbon. The dye-free liquid that is isolated in the dye separation process is substantially free of dye, e.g., containing an undetectable amount of dye as determined by means of spectrophotometric analysis.

The particulate activated carbon typically has a 200 mesh pparticle size (e.g., a pparticle size of 0.075 mm). An example of a commercially available particulate activated carbon that may be used in the present invention is Filtrasorb 200 activated carbon from Calgon Carbon Corporation.

The amount of activated carbon that is required to effect dye separation is dependent in part on the temperature of the bath. In general, the amount of activated carbon required to effect dye separation is: reduced as the temperature of the bath is reduce; and increased as the temperature of the bath is increased. In an embodiment of the present invention, the bath is contacted with the activated carbon at a temperature of 25°C.

The dye(s) optionally added to the dye-free liquid may be selected from static dyes, photochromic dyes, and combinations thereof. The static dyes and photochromic dyes that may be added include those classes and examples described previously herein. The dye added to the dye-free liquid may be of the same type as the dye that was removed from the bath, in which case the further bath is a fresh or refreshed bath. Alternatively, the dye added to the dye-free liquid may be different than the dye that was removed from the bath, in which case the further bath is a new or different bath.

The dye separation process may further include adding additional materials to the dye-free liquid and/or the further bath. Such other additional materials include, for example, surfactants and/or performance enhancing additives, which may each be selected from those classes and examples as described previously herein.

Upon removal from the bath, the dyed plastic profile is typically rinsed to remove excess bath material there from. The rinsing step is typically achieved by contacting at least a portion of the surface of the dyed profile with a rinse composition comprising water, and optionally a carrier represented by formula I, and/or a diol. The water of the rinse composition may be deionized or distilled water. The carrier and diol that may be present in the rinse composition are as described previously herein with reference to the bath, and may each be selected from those classes and examples as recited previously herein. For example, in an embodiment, the carrier is ethyleneglycol mono-butly ether, and the diol is diethylene glycol. Preferably, the rinse composition is composed of water, a carrier represented by formula I and a diol (as described previously herein with reference to diol (iv) of the bath).

The rinse composition may be contacted with the surface of the dyed plastic profile by means of, for example, immersion (dipping), spray application and/or curtain application. After contact with the surface of the dyed plastic profile, the rinse composition may be recycled and used to rinse additional dyed profiles. After a number of rinse cycles, dye will typically accumulate in the recycled rinse composition. Accumulated dye may be removed from the recycled rinse composition by contacting the recycled rinse composition with particulate activated carbon, as described previously herein with regard to the dye separation process. Upon separating accumulated dye from the recycled rinse composition, the dye-free recycled rinse composition may then be used to rinse additional dyed profiles.

The rinse composition typically contains water in an amount typically from 50 (or 51) to 100 parts by weight, more typically from 60 to 87 parts by weight, and further typically in an amount of from 65 to 75 parts by weight. The parts weights being based on the total weight of the rinse composition, in each case.

If present, the amounts of carrier and/or diol that may be present in the rinse composition may be selected from those ranges and amounts as recited previously herein with regard to the bath. For example, the carrier may be present in the rinse composition in an amount typically from 10 to 30 parts by weight, more typically from 15 to 25 parts by weight, and further typically in an amount of from 17 to 20 parts by weight. The parts weights being based on the total weight of the rinse composition, in each case. The diol may, for example, be present in the rinse composition in an amount of typically from 1 to 20 parts by weight, more typically from 5 to 15 parts by weight, and further typically in an amount of from 10 to 12 parts by weight. The parts weights being based on the total weight of the rinse composition, in each case.

After rinsing, the dyed plastic profile is typically dried. Drying may be accomplished by wiping the rinsed dyed plastic profile with a dry cloth, and/or by standing at room temperature (25°C). Alternatively, the rinsed dyed plastic profile may be dried by exposure to elevated temperatures (above 25°C), e.g., at a temperature of from 50°C to 100°C. In addition, warm air (e.g., having a temperature of 50°C to 100°C) may be passed over the surfaces of the rinsed dyed plastic profile.

The treatment is carried out particularly preferably in such a manner that the plastic profile, after being extruded and calibrated (such as for example after passing through a calibration device ― such as for example a calibrating sleeve), passes through a bath containing at least one additive, particularly preferably selected from at least one additive from the group comprising dyes and UV stabilizers, and then passes through a rinsing bath and the plastic profile is then transported by a pull-off device and then cut to the desired length by suitable methods, such as for example by sawing.

The present invention is more particularly described in the following examples, which are intended to be illustrative only, since numerous modifications and variations therein will be apparent to those skilled in the art.

### Examples

The apparatus used performing the following examples consists of:
- an extruder with a three-zone screw having a diameter (D) of 48 mm and a length of 33XD
- a pipe extrusion head with a die diameter of 50 mm and a mandrel diameter of 44 mm
- a calibrating sleeve of a diameter of 46 mm
- a temperature-adjustable bath (30 1) and a rinsing bath (20 1)
- an additive tank with a capacity of 80 1
- a pull-off device and
- a length-cutting device (a saw).

From the die the melt passes through the calibrating sleeve and the temperature-adjusted water bath having the temperatures mentioned in Table 1. The final shaping and cooling of the material takes place in the calibration device and the bath. Then the tube is transported through a pull-off device and cut in lengths by means of a saw.

**Table 1 Process parameters of the apparatus**

| Process parameters | |
|---|---|
| Temperature in extruder Z1 | 210°C |
| Temperature in extruder Z2 | 250°C |
| Temperature in extruder Z3 | 250°C |
| Temperature in extruder Z4 | 260°C |
| Temperature in extruder Z5 | 260°C |
| Temperature in extruder Z6 | 255°C |
| Temperature of the flange Z7 | 250°C |
| Temperature of the pipe-extrusion head Z8 | 250°C |
| Temperature of the pipe-extrusion head Z9 | 240°C |
| Temperature of the pipe-extrusion head /10 | 240°C |
| Rotational speed of the extruder | 35 rpm |
| Melt pressure | 42 bars |
| Melt temperature | 260°C |
| Extruder torque | 60 A |
| Rate of throughput | 25 kg/h |
| Temperature of the calibrator Z 1 | 16°C |
| Temperature of the calibrator Z2 | 50°C |
| Temperature of bath 1 | 96°C |
| Temperature of the water bath 2 | 20°C |
| Additive tank | 96°C |
| Pull-off speed | 0.8 m/min |
| External tube diameter Ø | 44 mm |
| Wall thickness | 2 mm |

| | |
|---|---|
| Z1 -Z7: different sections of the Extruder having the a.m. temperature | |

### Example 1

For the extrusion of polycarbonate tubes having a diameter of 46 mm and a wall thickness of 2 mm, a highly viscous branched polycarbonate (Makrolon® 1143) is used. The polycarbonate has a MVR measured (according to ISO 1133) of about 3 cm³/10 mins.

### Recipe for the dye solution:

Total quantity: 60 litres consisting of:
- 58 litres of water
- 2 litres of benzyl alcohol
- 250 g of powdered dyes consisting of:
   180 g of Dianix Turquoise Blue S-BG (from Dystar)
   70 g of Dianix Blue E-R 150% (from Dystar)

### Description:

The dyes are first dispersed in an additive tank with water at 40°C and then the solution is heated to 96°C in the additive tank and circulated in loop with the bath. Then benzyl alcohol is metered into the additive tank, after which the solution is continuously pumped in a loop from the additive tank into bath 1 and back to the additive tank. This allows the uniform distribution and circulation in the region of the Makrolon® tube in order to provide homogeneous additive treatment, thus guaranteeing uniform dye distribution. Now the tube passes through the bath with the dye solution and by regulating the pull-off speed from 0.6 to 2.0 m/min, the time during which the solution acts on the Makrolon tube can be varied, thus allowing the colour intensity and the depth of migration to be adjusted.

Using a quantity of solution of 60 litres, extrusion was carried out over a period of 3 hours at a throughput rate of 25 kg/h of tubing. The dyeing intensity remained constant over the entire running time.

In an additional test, 5% Makrolon® 1920 (an opal dye masterbatch) was added to Makrolon® 1143 in order to assess the colouring quality, intensity and distribution of the colour on an opal tube. Very effective distribution was obtained over the entire test period.

### Example 2

For the extrusion of polycarbonate tubes with a diameter of 46 mm and a wall thickness of 2 mm a highly viscous branched polycarbonate, Makrolon® 1143, is used. The polycarbonate has a MVR of about 3 cm³/10 mins.

### Recipe of the dye solution:

Total quantity: 60 litres consisting of:
- 42 litres of water
- 12 litres of butoxy-ethanol (ethylene glycol butyl ether)
- 6 litres of diethylene glycol
- 180 g of powdered dyes consisting of:
   108 g of Macrolex^{®} Red G (from Lanxess Deutschland GmbH)
   33 g of Macrolex^{®} Red 5B (from Lanxess Deutschland GmbH) and
   39 g of Macrolex^{®} Yellow 3G (from Lanxess Deutschland GmbH)

### Description:

The dyes are first dissolved in the mixed solvents in the additive tank at 40°C, then water is added and this solution is heated to 96°C in the additive tank and circulated in loop with the bath. Then the solution is continuously pumped in a loop from the additive tank into the bath and back again into the additive tank. This allows the uniform distribution and circulation in the region of the Makrolon^{®} tube in order to provide homogeneous additive treatment, thus guaranteeing uniform dye distribution.

Then the tube passes through the bath with the dye solution and by regulating the pull-off speed from 0.6 to 2.0 m/min the time during which the solution acts on the Makrolon^{®} tube can be varied, thus allowing the colouring intensity and the depth of migration to be adjusted.

Using a quantity of solution of 60 litres, extrusion is carried out over a period of 3 hours at a throughput rate of 25 kg/h of tubes. The dyeing intensity remains constant over the entire running time.

In an additional test 5% Makrolon^{®} 1920 (an opal dye masterbatch) was added to Makrolon^{®} 1143 in order to assess the colouring quality, intensity and distribution of the colour on an opal tube. Very effective distribution was obtained over the entire test period.

## Claims

1. A process for treatment of the plastic profiles which is **characterized in that** the plastic profile, after being extruded and calibrated, is passed through a bath containing at least one additive.

2. A process according to claim 1 wherein the additives are selected from at least one of the group consisting of dyes, UV stabilizers, antistatic agents, antidrop agents, IR absorbers, surfactants, optical brighteners and biocides.

3. A process according to claim 2 wherein the additives are selected from at least one of the group consisting of dyes and UV stabilizers.

4. A process according to claim 1 wherein the bath is in an immersion tank or vessel.

5. A process according to claim 1 wherein the additive is in an additive tank and the additive is circulating in loop with a bath.
